Europäisches Patentamt

**European Patent Office**

Office européen des brevets

(11) Numéro de publication: **0 124 427 B1**

## FASCICULE DE BREVET EUROPEEN

(45) Date de publication du fascicule du brevet:
22.06.88

(51) Int. Cl.⁴: **B 60 G 17/04, F 16 F 15/04, B 62 D 33/06**

(21) Numéro de dépôt: **84400804.5**

(22) Date de dépôt: **20.04.84**

(54) Support élastique à asservissement pneumatique.

(30) Priorité: 22.04.83 FR 8306613

(43) Date de publication de la demande:
07.11.84 Bulletin 84/45

(45) Mention de la délivrance du brevet:
22.06.88 Bulletin 88/25

(84) Etats contractants désignés:
DE FR GB IT

(56) Documents cités:
DE - A - 2 609 392
DE - B - 1 132 949
FR - A - 860 556
FR - A - 1 223 819
FR - A - 1 333 394
FR - A - 1 416 885
FR - A - 2 327 449
GB - A - 698 953
US - A - 2 115 072
US - A - 2 912 254
US - A - 2 978 256
US - A - 3 141 659

(73) Titulaire: Caoutchouc Manufacturé et Plastiques Société Anonyme dite:, 143, rue Yves-le-Coz B.P. 554, F-78005 Versailles Cedex (FR)

(72) Inventeur: Bechu, Jean-Pierre, "Les Poissons" 20 ter, rue de Bezons, F-92400 Courbevoie (FR)

ACTORUM AG

## Description

L'invention est du domaine des isolations antivibratoires de machines fixes, de véhicules automobiles, poids lourds, ferroviaires ou de navires, lorsque l'on dispose commodément d'une source d'air comprimé.

Les systèmes de suspensions actives connus consistent à corriger immédiatement, dès détection les sollicitations d'un déplacement, il s'agit donc d'une régulation de niveau qui risque d'entraîner des consommations de fluide ou d'air comprimé prohibitives, en exerçant des accélérations plus élevées que le confort ne le permet.

Au contraire, une suspension pneumatique classique de véhicule assure une liaison élastique, aussi filtrante que nécessaire, grâce à sa flexibilité, ce qui demande toujours un amortissement par des moyens extérieurs; la correction de pression pour équilibrer des charges variables est assurée avec lenteur, sur la moyenne de plusieurs cycles d'oscillations, pour éviter les consommations inutiles d'air comprimé.

On connaît comme variante de suspensions pneumatiques classiques l'usage d'une enceinte épaisse d'élastomère adhérisé à des armatures rigides, dont la déformation permet de porter une partie de la charge (en particulier sa valeur minimale ou tare du véhicule) assistée, pour le complément, d'une pression d'air variable avec la charge statique, qui suit donc des variations plus rapides qu'une simple proportionnalité à la charge (DE-B-1132949).

Ce type de dispositif est utilisé, par exemple, dans les suspensions ferroviaires, où la régulation de la pression dans une enceinte assure la fonction d'une suspension pneumatique à section efficace à peu près constante, avec des variations très lentes par rapport à la fréquence propre, assurées par des régulateurs de niveau extérieurs, classiques dans cette application. Ceux-ci réalimentent le volume variable par communication avec la pression de la ligne d'admission ou le détendent par échappement à l'air libre à l'intérieur d'un dispositif appelé valve de nivellement. Si la communication est rapide par des canalisations de forte section, cette suspension est une simple régulation de niveau aux corrections brutales; en l'absence d'amortissement, elle sera flottante car soumise à des oscillations entretenues.

Les constructeurs y remédient par une alimentation (et un échappement) à débit très réduit, par des gicleurs de petit diamètre, qui limitent la correction de l'assiette à une très faible valeur à chaque oscillation. Il en résulte que la suspension pneumatique ainsi constituée est très peu amortie; pour être confortable elle nécessite une grande flexibilité par adjonction de grands extravolumes, une limitation des courses par butée progressive et un amortissement d'appoint efficace.

L'invention a pour objectif de concilier les avantages des suspensions pneumatiques à base de caoutchouc ayant des moyens de correction d'assiette lors des variations de charge avec ceux des suspensions pneumatiques proprement dites, active, où l'amortissement des vibrations est recherché par une consommation d'énergie fournie par la détente d'air comprimé, grâce à une modulation rapide de la pression d'appoint, ce qui évite les inconvénients de consommation d'air et d'amortissement complémentaire.

L'invention est caractérisé en ce que cette pression est modulée par la mise en communication rapide lors des débattements, par l'intermédiaire d'une valve de nivellement, de part et d'autre d'une faible course morte encadrant la position d'équilibre, avec l'un ou l'autre de deux extravolumes, réglés, l'un à une pression surabondante, l'autre à une pression modérée. Ces pressions sont calculées pour qu'après la mise en communication la suspension communique à la masse suspendue des accélérations correctrices du déplacement restant dans une valeur acceptable pour le confort des passagers. C'est-à-dire pour que la somme des masses d'air réunies ait une pression exerçant sur la surface active environ 0,90 et 1,10 fois la valeur nécessaire à l'équilibre. A la fin de chaque demi-oscillation, le régulateur doit chercher à rétablir la pression initiale ou, ce qui revient au même, il va chercher à rétablir la différence avec la pression actuelle dans le volume du travail. Pendant ce temps, dans le volume interne, la pression s'est abaissée avant que ne se produise la mise en communication avec l'extravolume à pression réduite. Il se produit un phénomène symétrique pour le demi cycle de compression. Le rétablissement s'opèrera par un très faible débit, au moyen d'un gicleur, entre la pression de ligne (ou l'atmosphère) et les extra-volumes, à différentielle de pression plus réduite que dans l'usage classique et consommation d'énergie, par conséquent, plus faible.

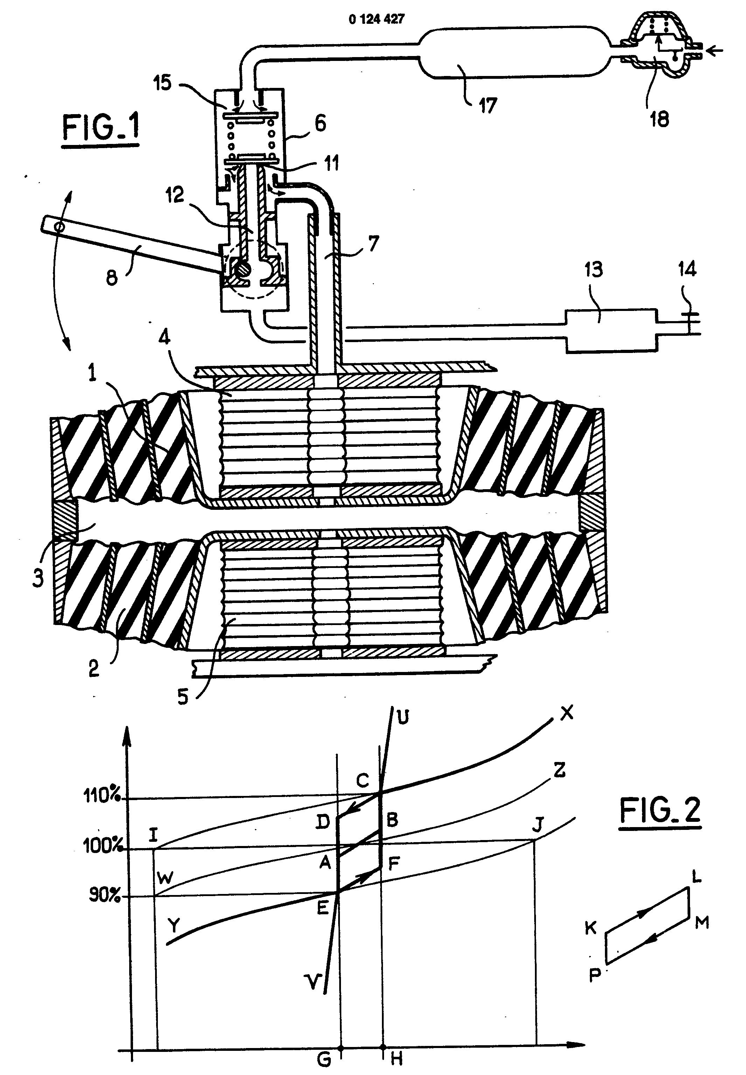

Le fonctionnement et les applications du dispositif seront mieux compris en se reportant aux figures 1 à 4.

La figure 1 représente, à titre non limitatif, une suspension ferroviaire utilisant les propriétés de cette disposition dont le fonctionnement sera expliqué par le diagramme de la figure 2.

Deux ressorts coniques (1) et (2) sont utilisés en série pour porter une charge appliquée par les sandwiches horizontaux (4) et (5) qui apportent l'élasticité horizontale nécessaire, en enfermant un volume variable (3) le plus réduit possible, relié à un régulateur de niveau classique (6) par un canal approprié schématisé en (7), le levier (8) apportant la mesure de niveau par un embiellage approprié. L'alimentation par le clapet (15), ou l'échappement par le clapet (11) fermant le canal (12) se produisent non plus par la pression de ligne et l'atmosphère comme dans l'usage traditionnel, mais à travers les extravolumes (13) et (17). L'extravolume (17) est réalimenté par le détendeur (18) à partir de la pression d'alimentation, en rétablissant progressivement une pression surabondante calculée pour que la somme des volumes (3) et (17) exerce dès l'ouverture du clapet (15) une sollicitation de 1, 10 fois la pesanteur sur la masse suspendue. La détente par le canal (12) se produit dans l'extravolume (13) préalablement réglé à une pression modérée par le détendeur (14) (qui peut être une simple fuite contrôlée) pression calculée pour exercer dès l'ouverture du clapet (11) dans la somme des volumes (3) et (13) une sollicitation de 0,90 fois la pesanteur sur la masse suspendue.

L'intérêt de la suspension pneumatique étant de pouvoir s'adapter à des charges variables, la pression d'équilibre dans l'enceinte (3) sera obtenue par indexation du détendeur (18) à une mesure de la charge soit par capteur, soit par transmission lente de la pression moyenne dans l'enceinte (3). L'expérience permettra d'indexer ou non à la charge le détendeur (14) qui règle l'extravolume (13) à une pression très modérée. Une fuite contrôlée peut être réalisée par la porosité de tout ou partie d'une paroi- éventuellement déformable si elle est réalisée en élastomère cellulaire-dudit extravolume (13). De même suivant les besoins, la mise en commun entre la suspension gauche et la suspension droite d'un véhicule – soit de l'extravolume (17) – soit de l'extravolume (13) – soit des deux, assure une rigidité d'anti- tiroulis même si les pressions d'équilibre dans chaque enceinte (3) sont légèrement différentes sous des charges mal centrées.

La figure 2 représente le diagramme de fonctionnement valable dans tous les cas revendiqués. Les abscisses sont les déplacements verticaux, et les ordonnées la force exercée par le support élastique sur la masse suspendue.

A l'intérieur des limites G–H où s'ouvrent les communications avec l'un ou l'autre des extravolumes, la masse d'air enfermée dans le volume de travail (3) procure à l'ensemble, du fait de son petit volume, une rigidité représentée par le segment AB lorsqu'on est à l'équilibre avec la charge nominale, et qui se déplace parallèlement en DC ou en EF si la masse d'air a été accrue ou réduite par la communication. Au delà de l'ouverture de l'une ou l'autre communication, dans l'hypothèse où la régulation rétablissant les pressions antérieures ne se fait que lentement par rapport à un cycle d'oscillations, l'équilibre est décrit par la courbe polytropique du volume total CX ou EY. Dans le cas contraire d'une régulation de niveau agissant immédiatement, les forces en jeu sont représentées par CU ou EV, avec des accélérations correctrices du déplacement exagérées par rapport au confort requis.

Pour les débattements supérieurs à G–H, le confort dans la caisse est ainsi rendu équivalent à celui d'une suspension pneumatique de grande flexibilité qui suivrait le diagramme WZ parallèle aux deux polytropiques CX et EY. La masse suspendue est rappelée alternativement vers les points I et J d'équilibre virtuel à masse d'air constante.

La différence de comportement est le travail actif absorbé dans un cycle. Si la communication se referme en H, la détente dans l'enceinte (3) suit la pente relativement raide CD; au contraire, la compression à partir de G suit la pente EF jusqu'à ce que l'autre communication se produise. Le travail fourni contre la pesanteur est représenté par l'aire du parallélogramme EFCD parcouru dans le sens négatif, au contraire d'un cycle d'hystérésis transformant en chaleur cette énergie perdue en suivant le parallélogramme KLMP, représentatif d'un amortissement à friction (ou une ellipse pour un amortissement visqueux de l'enceinte caoutchoutique).

Dans un mouvement périodique sinusoïdal, ces deux diagrammes se retrouveraient en opposition de phase. Si le rétablissement des pressions n'a pas le temps d se produire, le parallélogramme va se réduire jusqu'au segment AB, et un réglage expérimental de gicleurs permet de choisir le compromis d'amortissement voulu sans accroître les accélérations exercées, jusqu'à une correction apériodique des impacts aléatoires de la route.

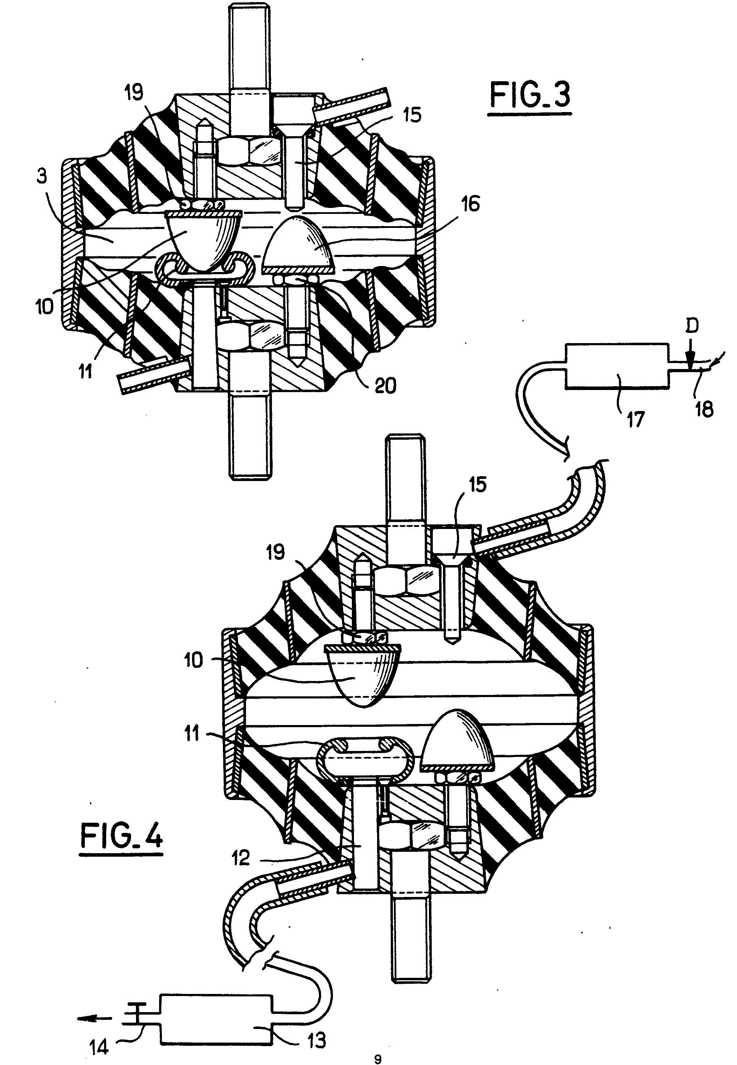

La figure 3 représente l'application à un support de cabine de poids lourd dont l'amélioration du confort demande une flexibilité procurant une fréquence propre de l'ordre de 2 Hz en portant une charge de 200 à 300 kg, qui doit recevoir, en conséquence, un amortissement notable afin de maintenir ce confort.

La figure 4 représente le support de cabine de poids lourd lorsque celui-ci est détendu en l'absence de charge. La petite butée conique (10) décollée de la valve d'étanchéité (11) assure la communication à plein débit par le canal (12) avec l'extravolume schématisé en (13) qui est antérieurement soumis à pression nulle par une fuite contrôlée (14), le clapet (15) restant fermé. Sur la figure 3, en position d'équilibre, la portée de la butée (10) sur la vale d'étanchéité (11) assure la fermeture de cette communication. Lorsque la butée (16) vient en contact avec le clapet (15) celui-ci se soulève et met en communication l'enceinte (3) avec l'extravolume schématisé en (17) qui est préalablement soumis à une pression surabondante par le détendeur (18). Le réglage de la course morte peut se faire par les vis et contre-écrous (19) et (20).

Avec une section efficace de 80 cm², ce dispositif porte, par exemple, 215 kg répartis entre une contrainte de 95 daN portés par l'élastomère et une pression relative de 1,5 bars dans la chambre interne à l'équilibre. Il a été calculé que des pressions passant à 2 bars pour s'opposer à la compression ou à 1 bar pour s'opposer à la détente peuvent être assurées par un dispositif simplifié de valves – intégrées dans le volume actif du support élastique – et des valeurs des extravolumes: l'un de 0,5 dm³ soumis à une pression pré-réglée de 3,2 bars (toujours en pressions relatives) au moyen d'un détendeur, éventuellement intégré à sa paroi, l'autre de 2 dm³ environ, relié à l'atmosphère par un gicleur capable de faire tomber en 1 seconde environ la pression relative de 1 bar qui s'établit lors de la liaison rapide entre le volume actif antérieurement à 1,5 bar et ce dernier antérieurement à 0 bar relativ.

Du fait de ces faibles différentielles de pression, la valve de nivellement peut être simplifiée et intégrée par moulage de pièces de caoutchouc dans le support élastique et accepter de légères fuites. Avantage auxiliaire, ces organe soumis à des pressions inférieures à 4 bars et de volume inférieur à 20 dm³ ne sont pas soumis à la réglementation française sur les appareils à pression de gaz.

Si la charge à porter est susceptible de varier notablement, le fonctionnement décrit plus haut n'est pas modifié si la pression préréglée calculée à 3,2 bars pour porter 215 kg est modifiée en fonction de la charge.

De même suivant les besoins, la mise en commun entre la suspension gauche et la suspension droite d'un véhicule – soit de l'extravolume (17) – soit de l'extravolume (13) – soit des deux, assure une rigidité d'antiroulis même si les pressions d'équilibre dans chaque enceinte (3) sont légèrement différentes sous des charges mal centrées.

## Revendications

1. Support élastique de machine ou de véhicule constitué d'une enceinte (3) à volume variable fermée par une paroi épaisse (1) de caoutchouc adhérisé à des armatures de renfort, qui supporte une partie de la charge, assistée pour le complément par une pression d'air dans l'enceinte ainsi constituée, support caractérisé en ce que cette pression est modulée par la mise en communication rapide lors des débattements, de part et d'autre d'une faible course morte encadrant la position d'équilibre, avec l'un ou l'autre de deux extravolumes (17, 13) réglés à une pression surabondante et une pression modérée, ces pressions étant telles, qu'après la mise en communication, une telle suspension communique à la masse suspendue des accélérations correctrices du débattement restant dans une valeur acceptable pour le confort des passagers.

2. Dispositif, selon la revendication 1, caractérisé en ce que l'enceinte à volume variable est formée de deux parois coniques dont le flexibilités sont mises en série pour porter la charge suspendue.

3. Dispositif, selon l'une des revendications 1 ou 2, caractérisé en ce que la ou les valves de communication rapide entre les volumes sont intégrées à l'intérieur de l'enceinte à volume variable.

4. Dispositif, selon l'une des revendications 1 à 3, caractérisé en ce que l'extravolume contenant la pression préalablement surabondante comporte dans sa paroi une partie déformable dont la déformation sert à contrôler le réglage de la pression.

5. Dispositif, selon l'une des revendications 1 à 4, caractérisé en ce qu'une paroi au moins de l'extravolume contenant la pression préalablement modérée ou ramenée lentement à la pression atmosphérique est réalisée en matériau déformable tel qu'un élastomère cellulaire avec faible fuite répartie dans toute sa paroi.

6. Dispositif, selon l'une des revendications 1 à 5 caractérisé en ce que les systèmes de suspension de droite et de gauche du véhicule ont en commun soit l'un soit les deux extravolumes de façon à assurer une rigidité d'antiroulis même si les pressions d'équilibre dans les enceintes internes sont légèrement différentes sous l'effet de charges mal centrées.

## Patentansprüche

1. Elastische Aufhängung einer Maschine oder eines Fahrzeuges, bestehend aus einer Kammer variablen Volumens, die von einer dicken Gummiwand begrenzt ist, die mit Verstärkungsarmierungen verklebt ist, dadurch gekennzeichnet, daß die Aufhängung durch ihre Konstruktion nur einen Teil der Last zu tragen in der Lage ist und für den restlichen Teil durch einen in der Kammer herrschenden Überdruck unterstützt ist, und daß der Überdruck in der Kammer moduliert wird, indem die Kammer beidseits eines die Gleichgewichtslage enthaltenen kleinen Totganges mit einem von zwei Zusatzvolumen in Verbindung gebracht wird, von denen das eine auf einen höheren, das andere auf einen niedrigeren Druck eingestellt ist, wobei diese Druckwerte derart sind, daß nach dem Inverbindungbringen die Aufhängung der von ihr getragenen Last Korrekturbeschleunigungen übermittelt, die auf einen für den Komfort der Fahrgäste annehmbaren Wert begrenzt sind.

2. Einrichtung nach Anspruch 1, dadurch gekennzeichnet, daß die Kammer variablen Volumens von zwei konischen Wänden gebildet ist, deren Flexibilität für die Aufhängung der Last in Reihe geschaltet ist.

3. Einrichtung nach Anspruch 1 oder 2, dadurch gekennzeichnet, daß das oder die Ventile für die Schnellverbindung der Kammer mit dem Zusatzvolumen in das Innere der Kammer variablen Volumens integriert sind.

4. Einrichtung nach einem der Ansprüche 1 bis 3, dadurch gekennzeichnet, daß das unter dem vorher eingestellten Überdruck stehende Zusatzvolumen in seiner Wand einen verformbaren Bereich aufweist, dessen Verformung zur Regelung des Druckes dient.

5. Einrichtung nach einem der Ansprüche 1 bis 4, dadurch gekennzeichnet, daß eine Wand zumindest des Zusatzvolumens, das unter dem zuvor eingestellten niederen Druck steht oder langsam auf Atmosphärendruck abgesenkt wird, aus einem verformbaren Material besteht, wie z. B. einem porösen Elastomer mit über die gesamte Wand verteilten Durchlässen geringen Durchtrittsquerschnitts.

6. Einrichtung nach einem der Ansprüche 1 bis 5, dadurch gekennzeichnet, daß die rechte und die linke Aufhängung des Fahrzeuges eines oder beide Zusatzvolumen gemein haben, um eine Steifheit gegen Rollbewegungen zu gewährleisten, und zwar selbst dann, wenn die Ausgleichsdrücke in den Innenräumen unter dem Einfluß schlecht zentrierter Belastungen leicht verschieden sind.

## Claims

1. Resilient support for a machine or vehicle formed by a variable volume enclosure (3) closed by a thick rubber wall (1) bonded to reinforcing members, which support a part of the load, with complementary assistance provided by an air pressure within the enclosure thus formed, said support being characterised in that this pressure is modulated by being placed in rapid communication during deflections to either side of a small dead region encompassing the equilibrium position, with the one or the other of two extra volumes (17, 13) regulated at a superabundant pressure and at a moderate pressure, these pressures being such that after said placing in communication, a suspension of this kind communicates to the suspended mass accelerations for correction of the deflection remaining within a range acceptable for the comfort of the passengers.

2. Device according to claim 1, characterised in that the variable volume enclosure is formed by two conical walls of which the flexibilities are coupled in series to carry the load suspended.

3. Device according to either of claims 1 or 2, characterised in that the valve or valves for rapid communication between the volumes are integrated within the variable volume enclosure.

4. Device according to one of claims 1 to 3, characterised in that the extra volume containing the initially superabundant pressure comprises a deformable section in its wall, of which the deformation serves to control the adjustment of the pressure.

5. Device according to one of claims 1 to 4, characterised in that at least one wall of the extra volume containing the pressure which is initially moderate or is slowly restored to atmospheric pressure is produced from a deformable material such as a cellular elastomer having a small leakage distributed throughout its wall.

6. Device according to one of claims 1 to 5, characterised in that the suspension systems to right and left of the vehicle have in common either one or both extra volumes, in such manner as to assure an anti-rolling rigidity even if the equilibrium pressures within the internal enclosures are slightly different under the effect of poorly centred loads.

FIG.1

FIG.2

FIG_3

FIG_4